(19) 

Europäisches
Patentamt

European
Patent Office

Office européen
des brevets

(11) **EP 2 847 773 B1**

(12) **FASCICULE DE BREVET EUROPEEN**

(45) Date de publication et mention
de la délivrance du brevet:
**20.04.2016 Bulletin 2016/16**

(21) Numéro de dépôt: **13725416.5**

(22) Date de dépôt: **03.05.2013**

(51) Int Cl.:
*H01F 30/14* (2006.01)     *H02M 5/14* (2006.01)
*H01F 38/18* (2006.01)

(86) Numéro de dépôt international:
**PCT/FR2013/050986**

(87) Numéro de publication internationale:
**WO 2013/167829 (14.11.2013 Gazette 2013/46)**

(54) **TRANSFORMATEUR TOURNANT TRIPHASE-DIPHASE**

DREIPHASEN-/ZWEIPHASEN-DREHTRANSFORMATOR

THREE-PHASE/TWO-PHASE ROTARY TRANSFORMER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.05.2012 FR 1254294**

(43) Date de publication de la demande:
**18.03.2015 Bulletin 2015/12**

(73) Titulaire: **Labinal Power Systems
31700 Blagnac (FR)**

(72) Inventeur: **DUVAL, Cédric
F-77920 Samois Sur Seine (FR)**

(74) Mandataire: **David, Alain et al
Cabinet Beau de Loménie
158, rue de l'Université
75340 Paris Cedex 07 (FR)**

(56) Documents cités:
**EP-A1- 0 688 028      FR-A1- 2 953 321
US-A1- 2011 050 377**

Printed by Jouve, 75001 PARIS (FR)

## Description

Arrière-plan de l'invention

La présente invention se rapporte au domaine général des transformateurs. En particulier, l'invention concerne un transformateur triphasé-diphasé tournant.

Dans certaines situations, il peut s'avérer nécessaire de transférer de façon équilibrée de l'énergie d'une source triphasée vers une source diphasée. Il existe des transformateurs fixes triphasés-diphasés, notamment l'un connu sous le nom de montage Scott et l'autre connu sous le nom de montage Leblanc. Cependant, il n'existe pas de transformateur tournant triphasé-diphasé.

Pour réaliser cette fonction, une solution consiste à utiliser un transformateur fixe triphasé-diphasé et deux transformateurs tournants monophasés, voir FR-2953321. Une autre solution consiste à utiliser trois transformateurs tournants monophasés avec une connexion Leblanc.

Ces deux solutions nécessitent toutefois une masse et un volume importants. De plus, dans le premier cas, on rencontre des problèmes d'appel de courant lors de la mise sous tension et d'aimantation résiduelle.

Il existe donc un besoin pour une solution améliorée permettant de transférer de façon équilibrée de l'énergie d'une source triphasée vers une source diphasée.

Objet et résumé de l'invention

L'invention propose un transformateur tournant triphasé-diphasé comprenant une partie triphasée et une partie diphasée mobiles en rotation autour d'un axe A l'une par rapport à l'autre,

la partie triphasée comprenant un premier corps en matériau ferromagnétique et des bobines triphasées, la partie diphasée comprenant un deuxième corps en matériau ferromagnétique et des bobines diphasées,

le deuxième corps délimitant une première encoche annulaire d'axe A et une deuxième encoche annulaire d'axe A, la première encoche étant délimitée par une première jambe latérale, une jambe centrale et une couronne, la deuxième encoche étant délimitée par la jambe centrale, une deuxième jambe latérale et la couronne,

les bobines diphasées comprenant une première bobine torique d'axe A dans la première encoche, une deuxième bobine torique d'axe A dans la première encoche, une troisième bobine torique d'axe A dans la deuxième encoche et une quatrième bobine torique d'axe A dans la deuxième encoche, la première bobine et la quatrième bobine étant reliées en série, la deuxième bobine et la troisième bobine étant reliées en série,

dans lequel, compte tenu des sens d'enroulement et du sens de connexion des bobines, un courant circulant dans la première bobine et la quatrième bobine correspond, pour la première bobine, à un premier potentiel magnétique et, pour la quatrième bobine, à un deuxième potentiel magnétique opposé au premier potentiel magnétique, et un courant circulant dans la deuxième bobine et la troisième bobine correspond, pour la deuxième bobine, à un troisième potentiel magnétique et, pour la troisième bobine, à un quatrième potentiel magnétique opposé au deuxième potentiel magnétique.

Ainsi, la conversion triphasé-diphasé et le passage entre deux repères tournants l'un par rapport à l'autre sont réalisés par le même transformateur tournant triphasé-diphasé. Ce transformateur présente un volume et une masse limités.

Avantageusement, la première bobine et la troisième bobine présentent chacune un nombre de tours $n_a$, la deuxième bobine et la quatrième bobine présentant chacune un nombre de tours $n_b$, avec $n_a = (2 + \sqrt{3}) n_b$.

Dans ce cas, le transformateur permet un transférer triphasé-diphasé équilibré.

Selon un mode de réalisation, la partie triphasée entoure la partie diphasée par rapport à l'axe A ou inversement. Cela correspond à une réalisation d'un transformateur appelée « en U ».

La partie triphasée et la partie diphasée peuvent être situées l'une à côté de l'autre dans la direction de l'axe A. Cela correspond à une réalisation d'un transformateur appelée « en E » ou « en Pot ».

Selon un mode de réalisation, le premier corps et le deuxième corps en matériau ferromagnétique entourent complètement les bobines triphasées et les bobines diphasées. Dans ce cas, le transformateur est cuirassé magnétiquement.

Selon un mode de réalisation, le premier corps délimite une troisième encoche annulaire d'axe A et une quatrième encoche annulaire d'axe A, la troisième encoche étant délimitée par une troisième jambe latérale, un deuxième jambe centrale et une deuxième couronne, la quatrième encoche étant délimitée par la deuxième jambe centrale, une quatrième jambe latérale et la deuxième couronne,

les bobines triphasées comprenant une cinquième bobine torique d'axe A dans la troisième encoche, une sixième bobine torique d'axe A dans la troisième encoche, une septième bobine torique d'axe A dans la quatrième encoche et une huitième bobine torique d'axe A dans la quatrième encoche, la sixième bobine et la septième bobine étant reliées en série.

Dans ce cas, la partie triphasée présente une topologie qui contribue à limiter le volume et la masse du transformateur. De plus, le transformateur peut être réalisé uniquement à partir de bobines toriques et ne nécessite donc pas de bobines de forme plus complexe.

Selon un mode de réalisation, la partie diphasée comprend en outre au moins un ensemble de bobines triphasées. De manière connue, un transformateur peut comprendre plusieurs secondaires. Ici, l'utilisation d'un secondaire diphasé équilibré et d'au moins un secondaire triphasé permet un transfert équilibré vers un nombre quelconque de source.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 est une vue en coupe d'un transformateur tournant triphasé-diphasé cuirassé magnétiquement, à flux liés forcés, selon un premier mode de réalisation de l'invention,
- la figure 2 est une vue en perspective éclatée du circuit magnétique du transformateur de la figure 1,
- les figures 3A à 3E sont des schémas électriques représentant plusieurs variantes de connexion des bobines du transformateur de la figure 1,
- les figures 4A à 4C représentent chacune un détail de la figure 1, selon différentes variantes de positionnement des bobines,
- la figure 5 est une vue en coupe d'un transformateur tournant triphasé-diphasé cuirassé magnétiquement, à flux liés forcés, selon un deuxième mode de réalisation de l'invention, et
- la figure 6 est une vue en perspective éclatée du circuit magnétique du transformateur de la figure 5.

Description détaillée de modes de réalisation

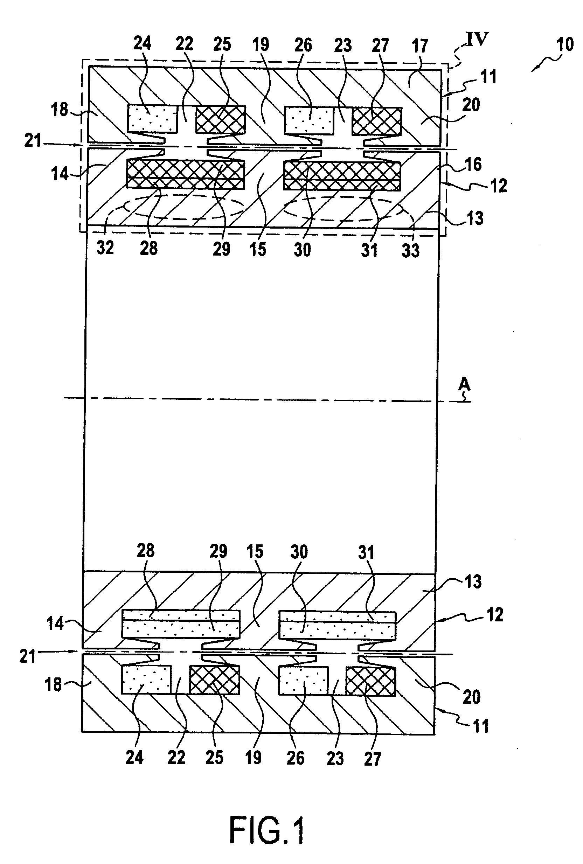

La **figure 1** est une vue en coupe d'un transformateur 10 selon un premier mode de réalisation de l'invention. Le transformateur 10 est un transformateur tournant triphasé-diphasé cuirassé magnétiquement, à flux liés forcés.

Le transformateur 10 comprend une partie 11 triphasée et une partie 12 diphasée aptes à tourner autour d'un axe A l'une par rapport à l'autre. La partie 11 est par exemple un stator et la partie 12 un rotor, ou inversement. En variante, la partie 11 et la partie 12 sont toutes les deux mobiles en rotation par rapport à un repère fixe non représenté.

La partie 12 comprend une couronne 13 d'axe A et trois jambes 14, 15 et 16 en matériau ferromagnétique. Chacune des jambes 14, 15 et 16 s'étend radialement à distance de l'axe A, à partir de la couronne 13. La jambe 14 se trouve à une extrémité de la couronne13, la jambe 16 se trouve à une autre extrémité de la couronne 13, et la jambe 15 se trouve entre les jambes 14 et 16. La couronne 13 et les jambes 14 et 15 délimitent une encoche 34 annulaire ouverte radialement vers l'extérieur. La couronne 13 et les jambes 15 et 16 délimitent une encoche 35 annulaire ouverte radialement vers l'extérieur. De manière générale, la couronne 13 et les jambes 14, 15 et 16 forment un corps en matériau ferromagnétique délimitant deux encoches 34 et 35 annulaires ouvertes radialement vers l'extérieur.

La partie 11 comprend une couronne 17 d'axe A et trois jambes 18, 19 et 20 en matériau ferromagnétique. La couronne 17 entoure la couronne 13. Chacune des jambes 18, 19 et 20 s'étendent radialement vers l'axe A, à partir de la couronne 17. La jambe 18 se trouve à une extrémité de la couronne 17, la jambe 20 se trouve à une autre extrémité de la couronne 17, et la jambe 19 se trouve entre les jambes 18 et 20. La couronne 17 et les jambes 18 et 19 délimitent une encoche 22 annulaire ouverte radialement vers l'intérieur. La couronne 17 et les jambes 19 et 20 délimitent une encoche 23 annulaire ouverte radialement vers l'intérieur. De manière générale, la couronne 17 et les jambes 18, 19 et 20 forment un corps en matériau ferromagnétique délimitant deux encoches 22 et 23 annulaires ouvertes radialement vers l'intérieur.

Les jambes 14 et 18, respectivement 15 et 19 ainsi que 16 et 20 se font face en délimitant un entrefer 21, et forment ainsi des colonnes du transformateur 10.

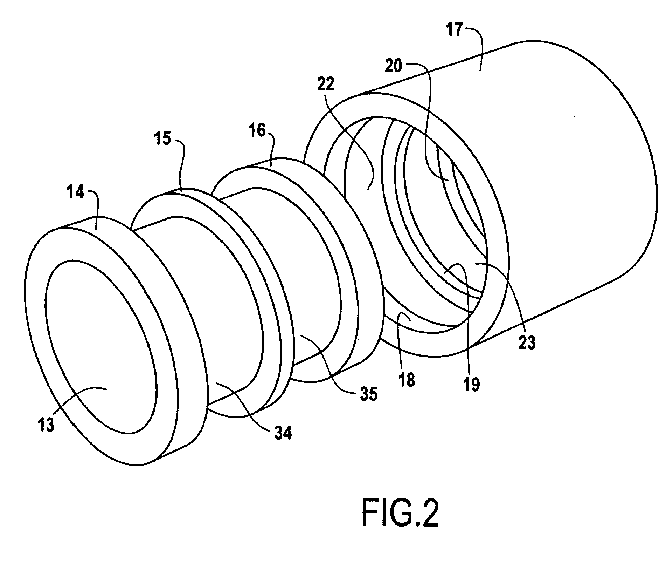

Les couronnes 13 et 17 ainsi que les jambes 14 à 16 et 18 à 20 forment un circuit magnétique du transformateur 10. Le transformateur 10 est donc un transformateur à trois colonnes. Plus précisément, le circuit magnétique du transformateur 10 comprend une première une première colonne (correspondant aux jambes 14 et 18), une deuxième colonne (correspondant aux jambes 15 et 19) et une troisième colonne (correspondant aux jambes 16 et 20). La **figure 2** est une vue en perspective éclatée qui représente le circuit magnétique du transformateur 10.

En se référant à nouveau à la **figure 1,** la partie 11 triphasée comprend des bobines 24, 25, 26 et 27 et la partie 12 diphasée comprend des bobines 28, 29, 30 et 31. Ci-après, on utilise les notations p et s en référence à une utilisation dans laquelle les bobines 24 à 27 sont les bobines primaires du transformateur 10 et les bobines 28 à 31 sont les bobines secondaires du transformateur 10. Cependant, primaire et secondaire peuvent bien entendu être inversés par rapport à l'exemple décrit.

La bobine 24 est une bobine torique d'axe A correspondant à une phase Up du transformateur 10. Elle se trouve dans l'encoche 22. La bobine 25 est une bobine torique d'axe A et se trouve dans l'encoche 22. La bobine 26 est une bobine torique d'axe A, se trouve dans l'encoche 23, et est reliée en série à la bobine 25. Les bobines 25 et 26 correspondent à une phase Vp du transformateur 10. Enfin, la bobine 27 est une bobine torique d'axe A correspondant à une phase Wp du transformateur 10. Elle se trouve dans l'encoche 23. Chacune des bobines 24 à 27 présente $n_1$ tours.

Par bobine torique d'axe A, on entend une bobine dont les tours sont enroulés autour de l'axe A. Le terme « torique » n'est pas ici utilisé dans le sens limitatif faisant référence à un solide engendré par la rotation d'un cercle autour d'un axe. Au contraire, comme dans les exemples représenté, la section d'une bobine torique peut être rectangulaire, notamment.

La bobine 28 est une bobine torique d'axe A qui se trouve dans l'encoche 34. La bobine 29 est une bobine torique d'axe A et se trouve dans l'encoche 34. La bobine 30 est une bobine torique d'axe A et se trouve dans l'encoche 35. Enfin, la bobine 31 est une bobine torique d'axe A qui se trouve dans l'encoche 35. La bobine 28 et la bobine 30 sont reliées en série et correspondent à une phase $V_1$ de la partie 12 diphasée. De manière correspondante, la bobine 29 et la bobine 31 sont reliées en série et correspondent à une phase $V_2$ de la partie 12 diphasée.

Les bobines 24, 25, 28 et 29 entourent un noyau magnétique 32 situé dans la couronne 13. Par « noyau magnétique », on entend une partie du circuit magnétique dans laquelle le flux de même sens créé par une bobine est le plus important. Les courants circulants dans les bobines 24 et 25 correspondent donc à des potentiels magnétiques dans le noyau magnétique 32. De manière correspondante, les bobines 26, 27, 30 et 31 entourent un noyau magnétique 33 situé dans la couronne 13. Les courants circulants dans les bobines 26 et 27 correspondent donc à des potentiels magnétiques dans le noyau magnétique 33.

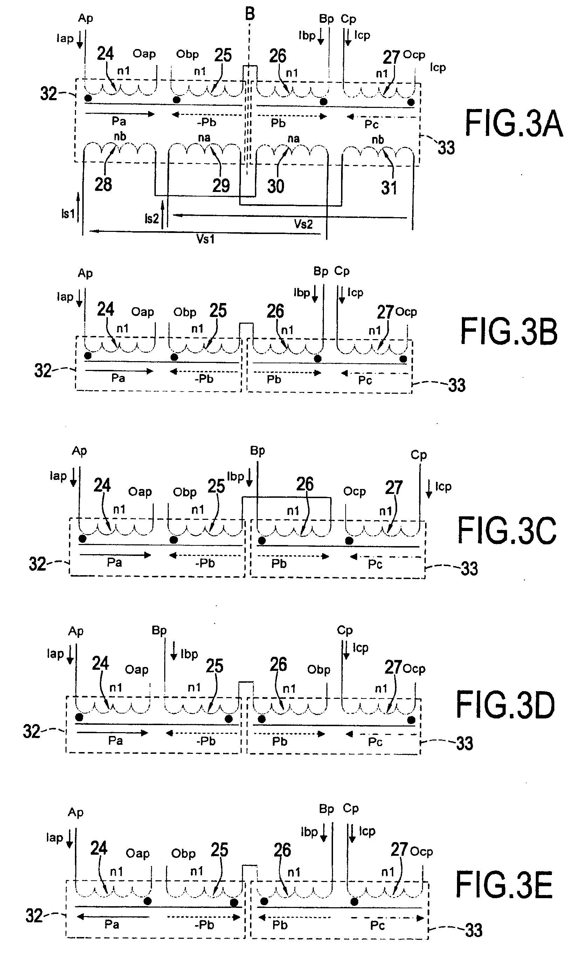

En référence à la **figure 3A,** on explique maintenant le fonctionnement du transformateur 10. Ci-après et sur la figure 3, on note :

- Ap, Bp et Cp, les points d'entrée des bobines triphasées du transformateur 10. Les phases U, V, W de la figure 1 correspondent respectivement aux phases A, B et C de la figure 3A, mais toutes autre type de correspondance est possible,
- $I_{ap}$, $I_{bp}$ et $I_{cp}$, les courants entrant respectivement aux points $A_p$, $B_p$ et $C_p$,
- $V_{ap}$ : la tension de la phase A de la partie 11 triphasée,
- $O_{ap}$, $O_{bp}$ et $O_{cp}$, les points de connexion permettant l'ensemble des couplages électrique identiques à tout transformateur triphasé fixe (étoile-étoile, étoile-triangle, triangle-triangle, triangle-étoile, zigzag...),
- Les points noirs indiquent la relation entre le courant circulant dans une bobine et le sens du potentiel magnétique correspondant : Si le point est sur la gauche du bobinage, le sens de bobinage fait que le potentiel magnétique créé est de même sens que le courant entrant (bobinage dans le sens horaire). Si le point est sur la droite du bobinage, le sens de bobinage fait que le potentiel magnétique créé est de sens inverse par rapport au courant entrant (bobinage dans le sens antihoraire),
- Pa, -Pb, Pb et Pc les potentiels magnétiques dans les noyaux 32 et 33 correspondant respectivement aux courants $I_{ap}$, $I_{bp}$ et $I_{cp}$,
- $n_a$ : le nombre de tours des bobines 29 et 30,
- $n_b$ : le nombre de tours des bobines 28 et 31,
- $n_t = n_a + n_b$ : le nombre de tours total de chaque phase $V_1$ et $V_2$
- $I_{s1}$, $I_{s2}$ : les courants dans la phase $V_1$, respectivement $V_2$, de la partie 12 diphasée,
- $V_{s1}$, $V_{s2}$ : les tensions de la phase $V_1$, respectivement $V_2$, de la partie 12 diphasée.

Grâce aux sens de bobinage et à la connexion en série des bobines 25 et 26 représentée sur la figure 3A, le courant $I_{bp}$ correspond, dans le noyau 32, à un potentiel magnétique -Pb de sens opposé au potentiel magnétique Pa et, dans le noyau 33, à un potentiel magnétique Pb de sens opposé au potentiel magnétique Pc.

Les figures **3B à 3E** sont des schémas similaires à la figure 3A sur lesquels seul le primaire triphasé est représenté, et représentent des variantes de connexion en série et de sens de bobinage, permettant d'obtenir le même effet.

Ainsi, le transformateur 10 permet de générer des potentiels magnétiques Pa, Pb et Pc égaux en module, de sens opposés sur chaque noyau magnétique 32 et 33 et symétriques par rapport à l'axe de symétrie B séparant les deux noyaux magnétiques.

Le couplage magnétique effectué par le circuit magnétique avec les topologies de bobinage des figures 3A à 3E permet d'avoir le même coefficient de couplage 3/2 sur les flux créés que sur un transformateur triphasé à flux forcés fixe par rapport à un transformateur monophasé. Pour avoir le meilleur coefficient de couplage, il faut que les réluctances de chaque colonne magnétique dues principalement à l'entrefer soient égales. En fait, il faut comme dans un transformateur triphasé à flux forcés fixe créer des réluctances équivalentes au niveau de chaque colonne qui soient plus élevées que celles du matériau magnétique. Dans le cas d'un transformateur tournant ceci est réalisé naturellement par l'entrefer.

Les phases de la partie 11 triphasée du transformateur 10 peuvent être équilibrées en inductance et en résistance.

En effet, l'inductance de la phase formée par les bobines 25 et 26 qui a au global $2*n_1$ tours est pourtant égale aux inductances des autres phases de $n_1$ tours car la géométrie du circuit magnétique permet d'annuler la moitié du flux dans chaque demi-bobine. Plus précisément, la bobine 25 a le même nombre de tours que la bobine 24 et voit le même circuit magnétique, de même pour la bobine 26 et avec la bobine 27. Or les bobines 24 et 27 sont symétriques avec le même nombre de tours et leurs inductances sont donc égales. La bobine 25 est bobinée en sens inverse de la bobine 26 et voit donc une annulation de son flux de moitié grâce à la dérivation de la colonne centrale (formée par les jambes 15 et 19) et de même pour la bobine 26. L'inductance globale des bobines 25 et 26 est donc égale à celle des bobines 24 et 27.

L'équilibrage des résistances peut s'effectuer en choisissant les sections des conducteurs des bobinages de manière appropriée. Les sections des phases U et W ayant $n_1$ tours sont égales alors que la section de la phase V possédant $2*n_1$ tours est le double des précédentes. En effet, pour conserver l'équilibre des résistances au niveau des phases, celle qui est deux fois plus longue doit aussi avoir une section double afin de compenser sa longueur plus élevée.

Côté diphasé, pour que les flux soient liés correctement, il faut que les ampères tours (le potentiel magnétique) des deux bobines d'une même phase, répartie sur chaque noyau magnétique 32 et 33, soient de sens opposés. Plusieurs configurations de sens de courant et de sens de bobinage permettent de satisfaire cette condition.

Pour un rapport $n_a = (2 + \sqrt{3}) n_b$, les tensions de la partie 12 diphasée sont de même valeur et en quadrature. Chaque phase $V_1$ et $V_2$ possède le même nombre $n_t$ de tour de bobine et est de cette façon symétrique par rapport au circuit magnétique. Les résistances et les inductances propre et mutuelle de chaque phase sont donc équilibrées. De même par géométrie, les inductances de fuites sont également équilibrées.

Autrement dit, le rapport $n_a = (2 + \sqrt{3}) n_b$ permet de transmettre de l'énergie et/ou des signaux d'une source triphasées vers une source diphasée de manière équilibrée.

Si l'on respecte la condition précitée sur le sens des ampères tours, la configuration du transformateur 10 n'agit pas sur la quadrature des tensions (déphasées entre elles de +/- n/2) et des courants (déphasées entre eux de +/- n/2) du côté diphasé mais uniquement sur le déphasage entre la partie 11 triphasée et la partie 12 diphasée.

Le rapport des courants est donné par :

$$\frac{I_{ap.}}{I_{s1}} = \frac{\sqrt{2}}{3} \frac{n_a + n_b}{n_1}$$

Le rapport des tensions est donné par :

$$\frac{V_{1s}}{V_{ap}} = \frac{1}{\sqrt{2}} \frac{n_a + n_b}{n_1}$$

Le transformateur 10 permet donc de transférer de manière équilibrée de l'énergie et/ou des signaux enter une source triphasée et une source diphasée tournant l'une par rapport à l'autre, sans nécessiter un montage de plusieurs transformateurs fixes et tournants.

Le transformateur 10 présente également d'autres avantages. Notamment, on peut constater que le circuit magnétique entoure complètement les bobines 24 à 31. Le transformateur 10 est donc cuirassé magnétiquement. De plus, les bobines 24 à 31 sont toutes des bobines toriques d'axe A. Le transformateur 10 ne nécessite donc pas de bobines de forme plus complexe. Enfin, le transformateur 10 présente une masse et un volume réduit.

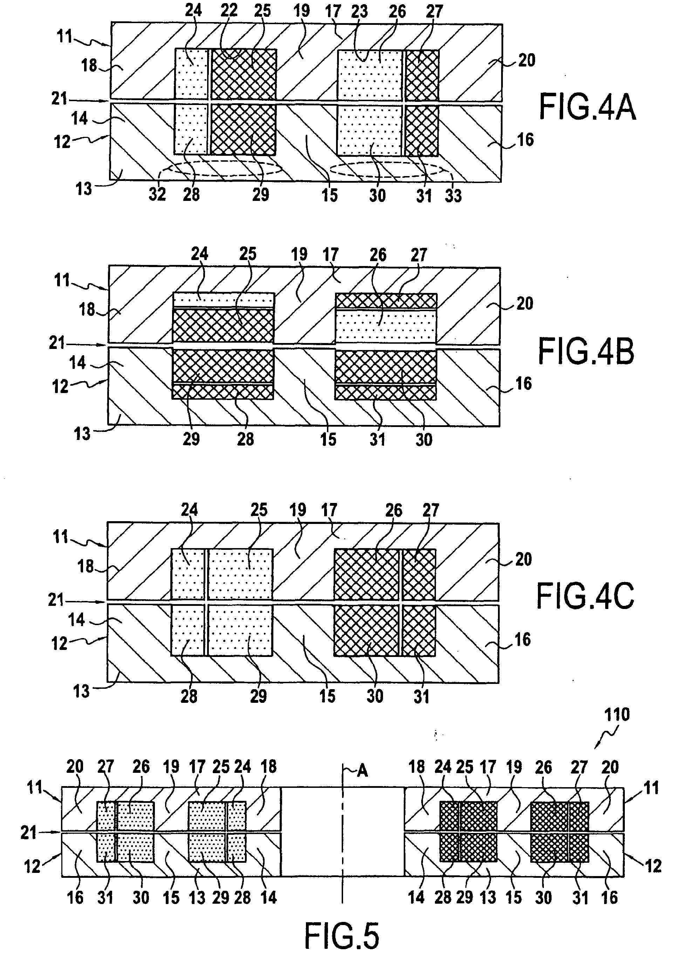

La position des bobines 24 à 31 représentée sur la figure 1 est un exemple et d'autres positions peuvent convenir. Les **figures 4A à 4C,** qui correspondent au détail IV de la figure 1, représentent chacune une autre possibilité de positionnement des bobines 24 à 31.

Sur la figure 4A, dans une encoche 22 ou 23, les bobines triphasées sont l'une à côté de l'autre dans la direction axiale, et enroulées dans des sens opposés. Les bobines diphasées sont également l'une à côté de l'autre dans la direction axiale, et enroulées dans des sens opposés.

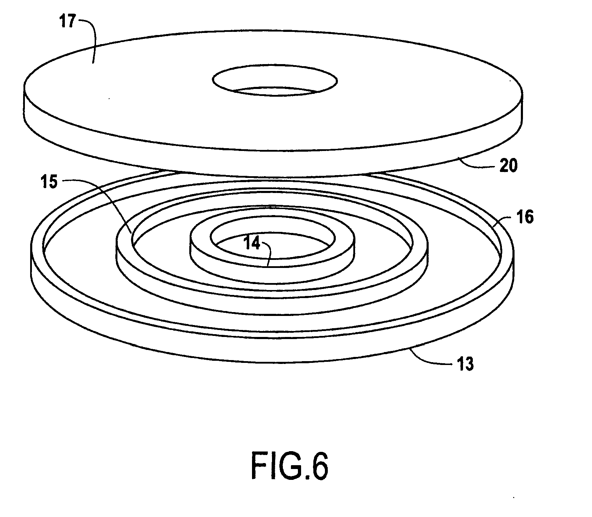

Sur la figure 6B, dans une encoche 22 ou 23, les bobines triphasées sont l'une autour de l'autre par rapport à l'axe A, et enroulées dans des sens opposés. Les bobines diphasées sont l'une autour de l'autre par rapport à l'axe A, et enroulées dans le même sens.

Sur la figure 6C, dans une encoche 22 ou 23, les bobines triphasées sont l'une à côté de l'autre dans la direction axiale, et enroulées dans le même sens. Les bobines diphasées sont l'une à côté de l'autre dans la direction axiale, et enroulées dans le même sens.

Dans une variante non représentée, les bobines d'une encoche 22 ou 23 sont mêlées.

Par ailleurs, le positionnement des bobines triphasées d'une des figures 4A à 4C peut être combiné avec le positionnement des bobines diphasées de chacune des figures 4A à 4C.

La **figure 5** représente un transformateur 110 selon un deuxième mode de réalisation de l'invention. Le transformateur 110 peut être considéré comme une variante « en E » ou « en Pot » du transformateur 10 « en U » de la figure 1. On utilise donc les mêmes références sur la figure 5 que sur la figure 1, sans risque de confusion, et une description détaillée du transformateur 110 est omise. On signale simplement que, comme on peut le voir sur la **figure 6** qui est une vue en perspective éclatée du circuit magnétique du transformateur 110, les références 13 et 17 correspondent à deux couronnes espacées axialement, les jambes 14 à 16 et 18 à 20 s'étendent axialement entre les deux couronnes 13 et 17, et que les noyaux magnétiques sont ici situés dans les colonnes.

De manière connue dans le domaine des transformateurs, un transformateur peut comprendre plusieurs secondaires. Ainsi, selon un mode de réalisation non représenté, un transformateur comprend, au primaire, une partie triphasée et, au secondaire, une partie présentant la même structure magnétique que la partie 12 du transformateur 10, au moins un ensemble de bobines triphasées (par exemple reliées selon le même principe que les bobines 24 à 27) et un ensemble de bobines diphasées comme le transformateur 10. Les bobines triphasées et diphasées du secondaire se trouvent dans les mêmes encoches 34 et 35.

Cela permet d'alimenter de manière équilibrée, à partir d'une source triphasée, un nombre quelconque de charges. Par exemple, pour alimenter onze charges, on peut utiliser trois secondaires triphasés et un secondaire diphasés (11 = 3*3 + 2).

Comme expliqué précédemment, la topologie de la partie 11 triphasée permet de reproduire les flux d'un transformateur fixe à flux liées forcés à trois colonnes. Ainsi, en variante, la partie triphasée du transformateur peut présenter une topologie différente que celle re-

## Revendications

1. Transformateur (10, 110) tournant triphasé-diphasé comprenant une partie triphasée (11) et une partie diphasée (12) mobiles en rotation autour d'un axe A l'une par rapport à l'autre, la partie triphasée (11) comprenant un premier corps en matériau ferromagnétique et des bobines triphasées (24, 25, 26, 27), la partie diphasée (12) comprenant un deuxième corps en matériau ferromagnétique et des bobines diphasées (28, 29, 30, 31), le deuxième corps délimitant une première encoche (34) annulaire d'axe A et une deuxième encoche (35) annulaire d'axe A, la première encoche (34) étant délimitée par une première jambe latérale (14), une jambe centrale (15) et une couronne (13), la deuxième encoche (35) étant délimitée par la jambe centrale (15), une deuxième jambe latérale (16) et la couronne (13), les bobines diphasées comprenant une première bobine (29) torique d'axe A dans la première encoche (34), une deuxième bobine (28) torique d'axe A dans la première encoche (34), une troisième bobine (30) torique d'axe A dans la deuxième encoche (35) et une quatrième bobine (31) torique d'axe A dans la deuxième encoche (35), la première bobine (29) et la quatrième bobine (31) étant reliées en série, la deuxième bobine (28) et la troisième bobine (30) étant reliées en série, dans lequel, compte tenu des sens d'enroulement et du sens de connexion des bobines, un courant circulant dans la première bobine (29) et la quatrième bobine (31) correspond, pour la première bobine (29), à un premier potentiel magnétique et, pour la quatrième bobine (31), à un deuxième potentiel magnétique opposé au premier potentiel magnétique, et un courant circulant dans la deuxième bobine (28) et la troisième bobine (30) correspond, pour la deuxième bobine (28), à un troisième potentiel magnétique et, pour la troisième bobine (30), à un quatrième potentiel magnétique opposé au deuxième potentiel magnétique.

2. Transformateur selon la revendication 1, dans lequel la première bobine (29) et la troisième bobine (30) présentent chacune un nombre de tours na, la deuxième bobine (28) et la quatrième bobine (31) présentant chacune un nombre de tours nb, avec na = $(2 + \sqrt{3})$ nb.

3. Transformateur (10) selon l'une des revendications 1 à 2, dans lequel la partie triphasée (11) entoure la partie diphasée (12) par rapport à l'axe A ou inversement.

4. Transformateur (110) selon l'une des revendications 1 à 2, dans lequel la partie triphasée (11) et la partie diphasée (12) sont situées l'une à côté de l'autre dans la direction de l'axe A.

5. Transformateur (10, 110) selon l'une des revendications 1 à 4, dans lequel le premier corps et le deuxième corps en matériau ferromagnétique entourent complètement les bobines triphasées et les bobines diphasées.

6. Transformateur (10, 110) selon l'une des revendications 1 à 5, dans lequel le premier corps délimite une troisième encoche (22) annulaire d'axe A et une quatrième encoche (23) annulaire d'axe A, la troisième encoche (22) étant délimitée par une troisième jambe latérale (18), un deuxième jambe centrale (19) et une deuxième couronne (17), la quatrième encoche (23) étant délimitée par la deuxième jambe centrale (19), une quatrième jambe latérale (20) et la deuxième couronne (17), les bobines triphasées comprenant une cinquième bobine (24) torique d'axe A dans la troisième encoche (22), une sixième bobine (25) torique d'axe A dans la troisième encoche (22), une septième bobine (26) torique d'axe A dans la quatrième encoche (23) et une huitième bobine (27) torique d'axe A dans la quatrième encoche (23), la sixième bobine (25) et la septième bobine (26) étant reliées en série.

7. Transformateur selon l'une des revendications 1 à 6, dans lequel la partie diphasée comprend en outre au moins un ensemble de bobines triphasées.

## Patentansprüche

1. Dreiphasen/Zweiphasen-Drehtransformator (10, 110), umfassend einen Dreiphasen-Teil (11) und einen Zweiphasen-Teil (12), die um eine Achse A zueinander drehbeweglich sind, wobei der Dreiphasen-Teil (11) einen ersten Körper aus ferromagnetischem Material und Dreiphasen-Spulen (24, 25, 26, 27) umfasst, wobei der Zweiphasen-Teil (12) einen zweiten Körper aus ferromagnetischem Material und Zweiphasen-Spulen (28, 29, 30, 31) umfasst, wobei der zweite Körper eine erste Ringnut (34) mit der Achse A und eine zweite Ringnut (35) mit der Achse A begrenzt, wobei die erste Nut (34) durch einen ersten Seitenschenkel (14), einen mittleren Schenkel (15) und einen Kranz (13) begrenzt ist, wobei die zweite Nut (35) durch den mittleren Schenkel (15), einen zweiten Seitenschenkel (16) und den Kranz (13) begrenzt ist, wobei die Zweiphasen-Spulen eine erste Ringspule (29) mit der Achse A in der ersten Nut (34), eine zweite Ringspule (28) mit der Achse A in der ersten Nut (34), eine dritte Ringspule (30) mit der Achse A in der zweiten Nut (35) und eine vierte Ringspule (31) mit der Achse A in der zweiten Nut (35) umfassen, wobei die erste Spule (29) und die vierte Spule (31) in Reihe verbunden sind, wobei die zweite Spule (28) und die dritte Spule (30) in Reihe verbunden sind,

wobei, unter Berücksichtigung der Wicklungsrichtungen und der Anschlussrichtung der Spulen, ein in der ersten Spule (29) und der vierten Spule (31) fließender Strom für die erste Spule (29) einem ersten magnetischen Potential und für die vierte Spule (31) einem zu dem ersten magnetischen Potential entgegengesetzten zweiten magnetischen Potential entspricht, und ein in der zweiten Spule (28) und der dritten Spule (30) fließender Strom für die zweite Spule (28) einem dritten magnetischen Potential und für die dritte Spule (30) einem zu dem zweiten magnetischen Potential entgegengesetzten vierten magnetischen Potential entspricht.

2. Transformator nach Anspruch 1, wobei die erste Spule (29) und die dritte Spule (30) jeweils eine Anzahl von Windungen na aufweisen, wobei die zweite Spule (28) und die vierte Spule (31) jeweils eine Anzahl von Windungen nb aufweisen, wobei na = (2 + √3) nb.

3. Transformator (10) nach einem der Ansprüche 1 bis 2, wobei, bezogen auf die Achse A, der Dreiphasen-Teil (11) den Zweiphasen-Teil (12) umschließt oder umgekehrt.

4. Transformator (110) nach einem der Ansprüche 1 bis 2, wobei der Dreiphasen-Teil (11) und der Zweiphasen-Teil (12) in der Richtung der Achse A nebeneinander gelegen sind.

5. Transformator (10, 110) nach einem der Ansprüche 1 bis 4, wobei der erste Körper und der zweite Körper aus ferromagnetischem Material die Dreiphasen-Spulen und die Zweiphasen-Spulen vollständig umschließen.

6. Transformator (10, 110) nach einem der Ansprüche 1 bis 5, wobei der erste Körper eine dritte Ringnut (22) mit der Achse A und eine vierte Ringnut (23) mit der Achse A begrenzt, wobei die dritte Nut (22) durch einen dritten Seitenschenkel (18), einen zweiten mittleren Schenkel (19) und einen zweiten Kranz (17) begrenzt ist, wobei die vierte Nut (23) durch den zweiten mittleren Schenkel (19), einen vierten Seitenschenkel (20) und den zweiten Kranz (17) begrenzt ist,

wobei die Dreiphasen-Spulen eine fünfte Ringspule (24) mit der Achse A in der dritten Nut (22), eine sechste Ringspule (25) mit der Achse A in der dritten Nut (22), eine siebte Ringspule (26) mit der Achse A in der vierten Nut (23) und eine achte Ringspule (27) mit der Achse A in der vierten Nut (23) umfassen, wobei die sechste Spule (25) und die siebte Spule (26) in Reihe verbunden sind.

7. Transformator nach einem der Ansprüche 1 bis 6, wobei der Zweiphasen-Teil ferner wenigstens eine Anordnung von Dreiphasen-Spulen umfasst.

**Claims**

1. A three-phase/two-phase rotary transformer (10, 110) comprising a three-phase portion (11) and a two-phase portion (12) that are movable in rotation relative to each other about an axis A;

   · the three-phase portion (11) comprising a first body made of ferromagnetic material and three-phase coils (24, 25, 26, 27), the two-phase portion (12) comprising a second body made of ferromagnetic material and two-phase coils (28, 29, 30, 31);
   · the second body defining a first annular slot (34) of axis A and a second annular slot (35) of axis A, the first slot (34) being defined by a first side leg (14), a central leg (15), and a ring (13), the second slot (35) being defined by the central leg (15), a second side leg (16), and the ring (13); and
   · the two-phase coils comprising a first toroidal coil (29) of axis A in the first slot (34), a second toroidal coil (28) of axis A in the first slot (34), a third toroidal coil (30) of axis A in the second slot (35), and a fourth toroidal coil (31) of axis A in the second slot (35), the first coil (29) and the fourth coil (31) being connected in series, the second coil (28) and the third coil (30) being connected in series;

   wherein given the winding directions and the connection directions of the coils, a current flowing in the first coil (29) and the fourth coil (31) corresponds, for the first coil (29), to a first magnetic potential and, for the fourth coil (31), to a second magnetic potential opposite to the first magnetic potential, and a current flowing in the second coil (28) and in the third coil (30) corresponds, for the second coil (28), to a third magnetic potential and, for the third coil (30), to a fourth magnetic potential opposite to the second magnetic potential.

2. A transformer according to claim 1, wherein the first coil (29) and the third coil (30) each presents a number $n_a$ of turns, and the second coil (28) and the fourth coil (31) each presents a number $n_b$ of turns,

with $n_a = (2 + \sqrt{3}) n_b$.

3. A transformer (10) according to claim 1 or claim 2, wherein the three-phase portion (11) surrounds the two-phase portion (12) around the axis A, or vice versa.

4. A transformer (110) according to claim 1 or claim 2, wherein the three-phase portion (11) and the two-phase portion (12) are situated one beside the other in the direction of the axis A.

5. A transformer (10, 110) according to any one of claims 1 to 4, wherein the first and second bodies made of ferromagnetic material completely surround the three-phase and two-phase coils.

6. A transformer (10, 110) according to any one of claims 1 to 5, wherein the first body defines a third annular slot (22) of axis A and a fourth annular slot (23) of axis A, the third slot (22) being defined by a third side leg (18), a second central leg (19), and a second ring (17), the fourth slot (23) being defined by the second central leg (19), a fourth side leg (20), and the second ring (17);

   · the three-phase coils comprising a fifth toroidal coil (24) of axis A in the third slot (22), a sixth toroidal coil (25) of axis A in the third slot (22), a seventh toroidal coil (26) of axis A in the fourth slot (23), and an eighth toroidal coil (27) of axis A in the fourth slot (23), the sixth coil (25) and the seventh coil (26) being connected in series.

7. A transformer according to any one of claims 1 to 6, wherein the two-phase portion further comprises at least one set of three-phase coils.

FIG.1

FIG.2

FIG.3A

FIG.3B

FIG.3C

FIG.3D

FIG.3E

FIG.4A

FIG.4B

FIG.4C

FIG.5

FIG.6

**EP 2 847 773 B1**

## RÉFÉRENCES CITÉES DANS LA DESCRIPTION

### Documents brevets cités dans la description

- FR 2953321